# EUROPEAN PATENT SPECIFICATION

(11) **EP 1 149 322 B1**
(45) Date of publication and mention of the grant of the patent: **10.09.2003**
(21) Application number: 00900675.0
(22) Date of filing: 06.01.2000
(51) Int. Cl.: G02B 27/22

(54) **METHOD AND APPARATUS FOR CONTROL OF VIEWING ZONES IN THREE-DIMENSIONAL IMAGES**
VORRICHTUNG UND VERFAHREN ZUR KONTROLLE DES SICHTFELDES IN DREIDIMENSIONALEN BILDERN
PROCEDE ET DISPOSITIF DE COMMANDE DE ZONES DE VISUALISATION DANS DES IMAGES TRIDIMENSIONNELLES

(30) Priority: 07.01.1999 GB 9900231
(43) Date of publication of application: 31.10.2001
(73) Proprietor: Street, Graham Stewart Brandon, Reading, Berkshire RG7 2NU (GB)
(72) Inventor: Street, Graham Stewart Brandon, Reading, Berkshire RG7 2NU (GB)
(74) Representative: Wilkinson, Stephen John
(86) International application number: GB0000006
(87) International publication number: WO00041026

(56) References cited:
- EP-A- 0 743 552
- EP-A- 0 788 008
- EP-A- 0 859 525
- WO-A-94/20875
- WO-A-97/22033
- GB-A- 2 317 771
- US-A- 5 424 553
- US-A- 5 689 340

## Description

This invention is concerned with the field of three-dimensional imaging and particularly with the control of the position in space of the viewing zones required for an observer to view a three-dimensional image without the use of special viewing aids.

### BACKGROUND

International Patent Application WO94/2087 (Street) describes apparatus in which two two-dimensional perspective images, provided by conventional liquid crystal display (LCD) panels, are combined with the aid of a semi-transparent mirror, so that each eye of the observer sees a different perspective but in the same location. This causes the brain to fuse these perspectives into one three-dimensional image. The principal purpose of the aforementioned invention is to avoid the need for the observer to wear special spectacles. In International Patent Application WO97/22033 (Street) apparatus is described which provides, simultaneously, both right and left eye images from a single LCD. Three-dimensional images provided in this way are generally referred to as autostereoscopic.

In certain embodiments described in both of the aforementioned publications, WO94/20875 and WO97/22033, the position of the viewing zone for each of the respective eyes of the observer is controlled by the precise relative positioning of two complementary optical components. The first of these comprises a regular array of juxtaposed cylindrical lens elements, or lenticles, fixed to and supported by a transparent substrate and is commonly referred to as a lenticular screen. The second and complementary component, which is positioned behind and close to the lenticular screen, comprises an array of light blocking regions on a transparent substrate. These blocking regions may take the form of long strips, as in WO94/20875, or they may be arranged in a chequered fashion, as in WO97/22033. European Patent Application EP 0 788 008 (Naosato et al.) describes apparatus similar to that of WO97/22033, although it is silent in respect of how to achieve observer tracking. This is a key objective of the current invention and is referred to, in principle, in both WO94/20875 and WO97/22033. Therein, by providing both the lenticular screen and the blocking pattern, referred to hereinafter as a barrier screen, with a vertically tapered structure and controlling the relative position of one with respect to the other, the lateral position of a viewing zone and its distance from the apparatus may be controlled. Such control is required at right angles to the long axes of the lenticles for horizontal displacement of the zone and along the axis of the central lenticle (vertically) for a relative change in local scale between the lenticular and barrier screens. This change of local scale gives rise to a change in the convergence of light leaving the apparatus from adjacent lenticles and, thus, adjusts the point of convergence and the distance of the viewing zone from the apparatus.

The required accuracy in the positioning of the lenticular screen, relative to its corresponding barrier screen, is high, as the optical magnification of the pattern of the barrier screen, which gives rise to the viewing zones, may be as high as 300 : 1. Typically, relative and rapid positioning to an accuracy of a few microns is desirable in the lateral direction, whereas the orthogonal positioning requirement, will be less demanding. If a conventional control loop was applied to each component, each would be permitted one degree of freedom, all others being constrained to the required precision. In addition, the structural stability of the system, as a whole, would have to be high, so as to avoid changes of scale due to temperature changes or mechanical creep in the position of components.

A proposed method for controlling the position of a lenticular screen relative to an LCD to provide an autostereoscopic image is described in UK Patent Application GB 2317771 A (Woodgate et al.). The features of the embodiments described in this prior art include, inter alia, firstly the need to analyse visible or infrared images of the observer and to use these signals to control, directly, the alignment of the lenticular screen relative to the image providing LCD, secondly one or more detector assemblies which are positioned with great accuracy relative to the pixel array of the LCD. Preferably the photodetectors are integrated within the LCD's construction. The aforementioned PCT Applications seek, in their preferred embodiments, to use standard LCD devices which have not been specifically adapted for stereoscopic use. Furthermore, these LCD's are typically positioned in front of a structured light source, thus being capable of conventional use, and do not form part of the observer tracking system.

Further general background to the state-of-the-art which has relevance to the current invention may be found in EP 0 743 552 (Fogel et al.). Here the objective is to register a segmented print, comprising many different perspectives of a three-dimensional scene, very precisely behind a lenticular screen prior to lamination for viewing by an observer. This is achieved by having a regular array of reference marks on the image bearing print, outside the viewable area, and observing the Moiré pattern between these small patterns and the regular array of cylindrical lens elements that make up the lenticular material. Two such patterns positioned at the top and bottom of the image to be registered can allow both lateral registration and the removal of any rotational error. There is no provision for adjusting the relative scale of the pitch between the segments of the print and that between the elements of the leuticualr screen. Furthermore, the process does not provide an absolute lateral position, but a multiplicity of solutions, as registration is only required with respect to the nearest lens element of the screen.

### SUMMARY OF THE INVENTION

It is an object of the current invention to provide a system for the control of the lateral position of a lenticular screen relative to a corresponding barrier screen, to provide a stable and accurately located viewing zone, without the need for the structural stability which would be demanded using independent control means for each of these components.

It is a further object of the invention to provide a convenient means for controlling the distance of the viewing zone from the apparatus.

It is another object of the invention to provide automatic compensation for any changes in relative scale or positioning, due to mechanical creep or thermal changes.

The apparatus and the method according to the invention are defined in claims 1 and 14, respectively.

Preferably the second substrate is a lenticular screen; the first convergent means comprises a first cylindrical lens element of said screen; and the first orthogonal plane is orthogonal to the longitudinal axis of said first cylindrical lens element.

Advantageously elongate aperture means is fixed with respect to the lenticular screen and arranged to block light which passes through lens elements adjacent to the first cylindrical lens element. The aperture means may comprise an opaque coating on a portion of the front surface of the lenticular screen

The first object pattern on the first substrate comprises alternate, juxtaposed light blocking and transmitting stripes having respectively a selection of widths and gaps and arranged so that, in use, the locating, with the first image detection means, of at least three boundaries between the images of light transmitting and light blocking stripes within said first image portion provides the data to unambiguously define the identity of one of said stripes and the location thereof along the first object axis relative to the first convergent means. Preferably a particular sequence of widths and gaps is not repeated within the object pattern.

Advantageously the first substrate has a second plurality of light blocking and light transmitting regions comprising in aggregate a second object pattern in the object plane; second convergent means fixed relative to the second substrate for substantially collimating in a second orthogonal plane, said second orthogonal plane being orthogonal to said object plane, light from points of said second object pattern to provide or subsequently form a second image pattern corresponding to said second object pattern at a second image plane; and second image detection means positioned at said second image plane for capturing a second image portion comprising a portion of said second image pattern, in which said second image portion contains sufficient image data to unambiguously define its location within said second image pattern along a second image axis corresponding to a second object axis at said second object pattern whereby, in use, the relative position along said second object axis of the first substrate relative to the second substrate is determined.

In certain embodiments the first image portion's location along the first image axis provides a first ordinate; the second image portion's location along the second image axis provides a second ordinate; and said first and second ordinates are combined to provide the position of the first substrate relative to the second substrate.

Preferably the second substrate is a lenticular screen having a tapered structure in which the first convergent means comprises a first cylindrical lens element of said screen and the second convergent means comprises a second cylindrical lens element of said screen spaced from said first lens element. The first and second patterns may be tapered, so that the width of each stripe reduces from one end to the other, and the first object axis and the second object axis may be inclined with respect to eachother so that the position of the first substrate relative to the second substrate can be provided in two orthogonal directions.

Advantageously, means for controlling the relative positions of the substrates in the two orthogonal directions is provided. In preferred embodiments the image detection means includes one or more linear CCD arrays. A sequence of three transitions or boundaries between transmitting and blocking regions can unambiguously define the location of these boundaries within the pattern of which they form part.

### DESCRIPTION OF PREFERRED EMBODIMENTS

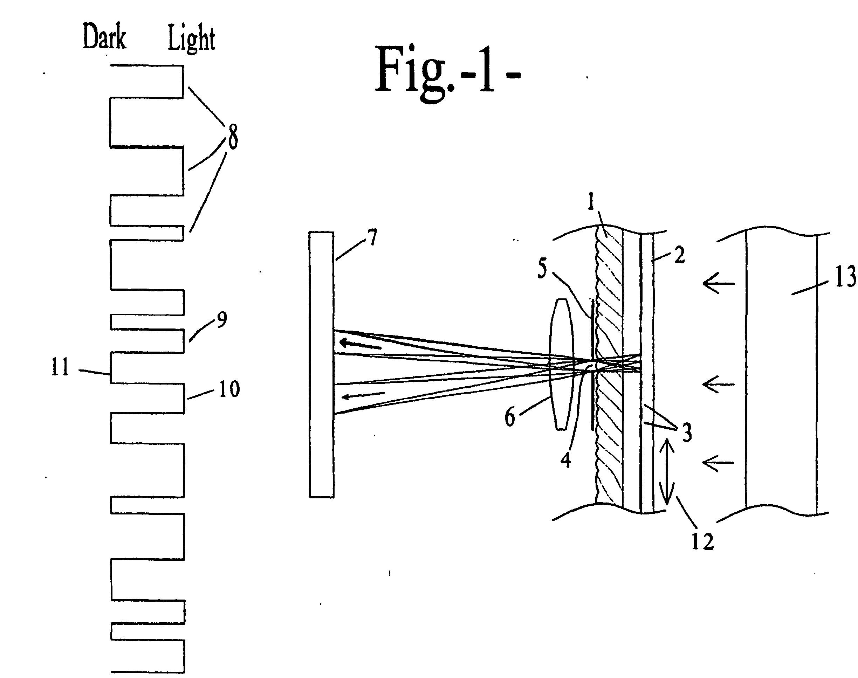

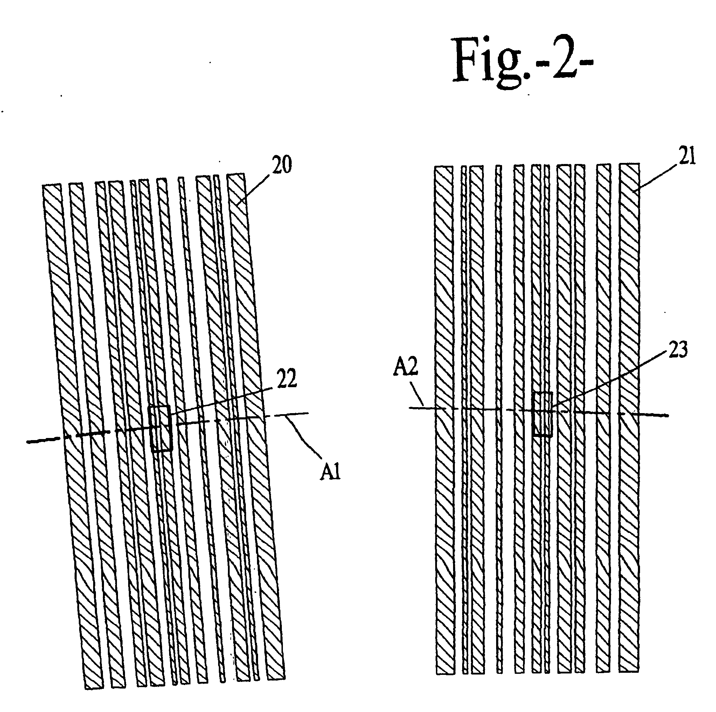

The invention will now be described with reference to Figures **1** and 2 in which:-
Figure 1 shows a section through position encoding apparatus constructed in accordance with the invention, together with a diagrammatic illustration of encoded position data, derived therefrom.
Figure 2 shows how two degrees of freedom for relative positioning may be provided in accordance with the invention.

A typical arrangement for encoding the position of a lenticular screen relative to a barrier screen is shown in Figure 1. A lenticular screen 1 is positioned in front of a barrier screen 2. A plurality of light transmitting regions and light blocking regions, shown respectively as light and bold line segments on the front surface 3 of barrier screen 2, are arranged side-by-side in an alternating fashion, thereby being juxtaposed to form in aggregate a defined pattern. One of the lenticular screen's lenses 4 is isolated from its neighbours by a narrow aperture in plate 5. This is typically considerably longer than its width, given the cylindrical nature of the lenticular screen's lens elements (lenticies). Lenticle 4 is a convergent element which collimates light from points on surface 3 to pass through the aperture in plate 5. Surface 3 may therefor be regarded as an abjoct plane at which is situated an object pattern. The collimating action of the lenticle occurs in a plane substantially orthogonal to both the object pattern and the longitudinal axis of the cylindrical lenticle 4. In this embodiment of the invention, lenticle 4 has a focal length of about 3 mms and collimates the light from the pattern and, so, a lens 6, with a focal length of approximately 20 mms reimages this light to form, in one dimension, a magnified image of part of the pattern at surface 3 on an image capture device in the form of a linear CCD array 7. This is the image detection means required to analyse features within the image. It is possible to arrange for some additional convergence of light in the orthogonal plane to form the image of the pattern, following passage through the lenticle, in which case lens 6 would not be required, as the lenticle would reimage the light whilst remaining substantially a collimating elernent.

Many different configurations in terms of scale and magnsfication of the object pattern are possible. In the example given the pattern comprises light providing stripes and dark spaces having gap sizes and widths which substantially equate to an integral multiple of one quarter of the pitch between the lens elements of the lenticular screen. A typical pitch between lenses in an autostereoscopic display system would be 0.6 mm, though larger and smaller lens pitches may conveniently be employed. If the whole of the pattern at surface 3 were to be imaged simultaneously onto the CCD's surface and lens element 4 behaved as a perfect imaging element, then the width of the pattern to be imaged would be approximately 6 mms and the field of view of this element would have to be greater than 90° if the whole of the image were to be viewed simultaneously. If the image formed had no distortion, then the CCD's signal and the image would correspond to the schematic representation 8. In practice, this is found to be impractical and is not necessary, as a portion of the image of the pattern is sufficient. Light transmitting gaps form image components such as 9 and 10. A blocking region creates a dark space 11. The relative widths of the blocking regions, the sizes of the gaps between them provided by the transmitting regions and the order in which these light and dark regions are arranged unambiguously define which portion of the image of the pattern is captured on the CCD. In fact, only three transitions are required for the particular pattern illustrated to extract the data needed to unambiguously define their exact position within the pattern to the accuracy that the CCD can provide. The pattern illustrated comprises three intrinsic relative dimensions for both the width of blocking regions and the gaps between them. No sequence comprising three transitions or boundaries between a transmitting gap or blocking region; thereby comprising one dark region having a width and one light gap of a particular relative size, is repeated within the pattern as a whole. Representing a light gap as being one (1L), two (2L) or three (3L) units in magnitude, and likewise the dark regions as having one (1D), two (2D) or three (3D) units of width, the particular pattern, used in the example given, comprises the following groupings of three transitions, each comprising, in full, a dark and a light region: -
2L3D, 3D3L, 3L2D, 2D1L, 1L3D, 3D2L, 2L1D, 1D1L, 1L2D,
2D2L, 2L2D, 2D3L, 3L1D, 1D3L, 3L3D, 3D1L, 1L1D, 1D2L

As the barrier screen is moved laterally 12 with respect to the lenticular lens 4, the pattern shifts on CCD 7, and different groupings of transitions may be used to determine the relative lateral position of the barrier screen 2 with respect to the lenticular screen 1. More precisely, the relative position of the object pattern on surface 3 of the barrier screen is determined relative to the axis of the lenticular element 4. In practice, this is conveniently done by locating the midpoint of the light region which is closest to a predetermined location on CCD 7, this point being substantially at the intersection of the optical axis of the lens element and the surface of CCD 7. To allow for transitions from one midpoint to the next, the practical field of view of lens element (4) must be such that any two neighbouring light regions can be brought into view simultaneously. In the illustrated example, this requires a field of view of approximately 23°, which is easily accommodated. Typically a conventional diffuse light source 13 is positioned behind the barrier screen 2.

Figure 2 illustrates how the use of two patterns on the barrier screen may be used to determine the position of the latter relative to the lenticular screen in front of it in two orthogonal directions. For the sake of diagrammatic convenience, the two patterns 20 and 21 are shown close together and at considerable magnification. In practice, a considerable gap would be typical, with one pattern on the left hand side of the barrier screen and the other on the right baud side. Two apertures 22 and 23 are shown schematically. For the sake of clarity the lenticular screen, which is situated inbetween the apertures and the barrier screen, is not included. Each of the apertures is positioned to block light passing through lenticles adjacent to a different one of two spaced lenticles on the lenticular screen. This provides respectively a first and a second convergent cylindrical lens element for forming separate images of the spaced patterns at different image planes associated with corresponding CCD detectors. Also illustrated is a deliberate taper between the two patterns 20 and 21. As the barrier screen is moved up and down relative to the apertures, there will be a component of movement orthogonal to the long axis of the stripes within each pattern and different portions thereof will become central to the field of view of the corresponding CCD (as provided in Figure 1 and not shown in Figure 2). Each of these detection arrangements has a different orthogonal plane defining a direction or axis (A1, A2) of measurement at the object pattern and at the corresponding image plane. When the lenticular screen and the barrier screen have an intrinsically tapered structure, as employed in the embodiments of the aforementioned WO94/20875 and WO97/22033 , it is the up and down relative motion which controls the convergence of the light transmitted through the lenticular structure and thus the distance or longitudinal positioning of the resulting viewing zone or zones. The directions of the measurement axes are inclined with respect to eachother at the plane where the object patterns are located. This enables two different ordinates to be obtained and these provide, in a simple manner, a measure of both the lateral relative motion between the lenticular and the barrier screen and their relative motion in the orthogonal (vertical) direction. By employing oppositely tapered patterns, as illustrated, the change in relative position derived from each CCD is opposed when the relative motion is vertical and has the same sign when the motion is lateral. Thus, by averaging the resulting relative motions, an accurate lateral position is derived and, by establishing the difference in the two relative positions detected, a term proportional to the relative vertical movement is obtained. The proportionality constant depends on the inclination of one pattern relative to that of the other. It will be clear that a small angle of inclination between the two ordinate axes, as illustrated, can provide a meaurement in the two required orthogonal directions, but that the result will have greater accuracy for horizontal motion than for the vertical. Conveniently, this is completely compatible with the requirements of an autostereoscopic display system, where lateral positioning of the viewing zones must be accurate and fast, but where there is considerable tolerance in the longitudinal positioning thereof.

The height of the apertures 22 and 23 may be small, as illustrated, if horizontal relative motion between lenticular and barrier screen is achieved by moving the lenticular screen relative to the detection system. However, in the case of the preferred embodiment of WO97/22033, it is the lenticular screen which is moved in a vertical direction relative to the overall assembly and, in this case, the height (or length) of apertures 22 and 23 must accommodate the full extent of this motion. In such embodiments, it is convenient to form the apertures on the surface of the lenticular screen by providing an opaque coating or layer on its surface. This has a clear region on that part of the surface which comprises the image forming lenticle.

Simple actuators such as stepper motors, DC motors or voice coils (not shown) may be used to position the two substrates (lenticular and barrier screen) relative to one another. Since position feedback for both directions of relative motion is obtained directly from the relative positions of the two screens or substrates, substantial accuracy is maintained without high cost. Even dimensional changes due, for example, to manufacturing tolerances or temperature effects are accommodated. This is particularly true of the tapered structure, in which a relative change of scale of the barrier screen or lenticular screen would automatically be compensated for by the necessary correction in the relative positions of these two components.

It will be clear to those versed in the art that the principles of this invention are not limited to the control of the relative position of a lenticular screen with respect to a corresponding barrier screen. Other components requiring optical position monitoring and/or control might benefit from similar arrangements. Although the object patterns illustrated comprise transparent regions, which would typically be back lit with a diffuse light source, it would be quite practical to replace such regions with appropriately shaped light emitting elements such as, for example, might be provided using light emitting polymers. In general the regions which are light blocking prevent light from leaving points from their location at the object plane. These are, therefore, light inhibiting. Conversely, the regions which are light transmitting could be replaced by regions which are light emitting, whether this light be generated at the object plane or elsewhere and re-emitted at its surface. This would include specularly reflected light. These are therefore in general light providing regions. Any reference herein to light blocking regions or stripes is therefore deemed to include light inhibiting ones and any reference herein to light transmitting regions is deemed to include light providing ones.

## Claims

1. Apparatus for the encoding of relative position comprising a first substrate (2) having a first plurality of light transmitting and light blocking regions forming in aggregate a first object pattern of juxtaposed stripes (20) in an object plane (3); a second substrate (1) positioned relative to and/or spaced from said first substrate; first optical convergent means (4) fixed to said second substrate for substantially collimating in a first orthogonal plane, being orthogonal to said object plane, light from points of said first object pattern to reimage said light in a first image plane and form, in use, a first image pattern (8) at said first image plane corresponding to said first object pattern; and first image detection means (7) positioned at said first image plane for capturing a first image portion comprising a portion of said first image pattern, wherein said first image portion, corresponding to said juxtaposed stripes, has alternating and juxtaposed light and dark regions (9, 10, 11) the widths and sequence of which unambiguously define the location of said first image portion within said first image pattern (8) along a first image axis corresponding to a first object axis (A1) at said first object pattern whereby the relative position along said first object axis of the first substrate relative to the second substrate is determined.

2. Apparatus as claimed in Claim 1 in which the second substrate is a lenticular screen; the first convergent means comprises a first cylindrical lens element of said screen; and the first orthogonal plane is orthogonal to the longitudinal axis of said first cylindrical lens element.

3. Apparatus as claimed in Claim 2 including elongate aperture means (5, 22) fixed with respect to the lenticular screen and arranged to block light which passes through lens elements adjacent to the first cylindrical lens element.

4. Apparatus as claimed in Claim 3 in which the aperture means comprises an opening in an opaque coating on a portion of the front surface of the lenticular screen

5. Apparatus as claimed in any preceding claim in which the widths of the light and dark regions are determined by locating, with the first image detection means, at least three boundaries between the images of said light and dark regions within said first image portion thereby providing the data to unambiguously define the identity of one of the corresponding juxtaposed stripes and the location thereof along the first object axis relative to the first convergent means.

6. Apparatus as claimed in any preceding claim in which the first substrate has a second plurality of light transmitting and light blocking regions forming in aggregate a second object pattern (21) in the object plane; second convergent means fixed to the second substrate for substantially collimating in a second orthogonal plane, being orthogonal to said object plane, light from points of said second object pattern to reimage said light in a second image plane and form, in use, a second image pattern at said second image plane corresponding to said second object pattern; and second image detection means positioned at said second image plane for capturing a second image portion comprising a portion of said second image pattern, in which said second image portion has light and dark regions the widths and sequence of which unambiguously define the location of said second image portion within said second image pattern along a second image axis corresponding to a second object axis (A2) at said second object pattern whereby the relative position along said second object axis of the first substrate relative to the second substrate is determined.

7. Apparatus as claimed in Claim 6 in which the first image portion's location along the first image axis provides a first ordinate; the second image portion's location along the second image axis provides a second ordinate; and said first and second ordinates are combined to provide the position of the frrst substrate relative to the second substrate.

8. Apparatus as claimed in Claim 7 in which the first and second patterns are tapered so that the width of each stripe reduces from one end to the other.

9. Apparatus as claimed in Claim 7 in which the first object axis (A1) and the second object axis (A2) are inclined with respect to eachother and, in use, the position of the first substrate relative to the second substrate is provided in two orthogonal directions.

10. Apparatus as claimed in Claim 7 in which the second substrate is a lenticular screen having a tapered structure in which the first convergent means comprises a first cylindrical lens element of said screen having a first principal axis and the second convergent means comprises a second cylindrical lens element of said screen spaced from said first lens element and having a second principal axis and in which said first and second principal axes are inclined with respect to eachother.

11. Apparatus as claimed in Claim 9 comprising means for controlling the relative positions of the substrates in the two orthogonal directions.

12. Apparatus as claimed in any preceding claim in which at least one of the image detection means comprises a linear CCD array.

13. Apparatus as claimed in any preceding claim in which the first substrate comprises a barrier screen and the first and second substrate provide in combination at least one viewing zone for an autostereoscopic display system.

14. A method for encoding the position of a first substrate (2) relative to a second substrate (I) which comprises the steps of forming a first object pattern (20) in an object plane (3) by providing a first plurality of light transmitting and light blocking regions in the form of juxtaposed stripes on said first substrate; providing first convergent means (4) fixed to said second substrate and positioning said second substrate relative to and/or spaced from said first substrate; substantially collimating with said first convergent means in a first orthogonal plane light from points of said first object pattern and reimaging said light in a first image plane to form a first image pattern at said first image plane corresponding to said first object pattern; positioning first image detection means (7) at said first image plane and capturing a first image portion comprising a portion of said first image pattern; determining, by means of the capturing step, the widths and sequence of light and dark regions (9, 10, 11) within the first image portion and unambiguously defining, thereby, the location of said first image portion within said first image pattern (8) along a first image axis corresponding to a first object axis (A1) at said first object pattern and the position along said first object axis of the first substrate relative to the second substrate.

15. The method of Claim 14 which includes arranging the first plurality of juxtaposed transmitting and blocking stripes to comprise a selection of respective gaps and widths in such a manner that a particular sequence of said gaps and widths is not repeated within said first object pattern; locating with the first image detection means at least three boundaries between the corresponding light and dark regions in the first image portion and thereby establishing the identity of a corresponding stripe in the first object pattern and the location thereof along the first object axis relative to the first convergent means.

16. The method of Claim 14 which includes the steps of providing a second plurality of light transmitting and light blocking regions in the form of juxtaposed stripes on said first substrate forming in aggregate a second object pattern (21) in said object plane; providing second convergent means fixed relative to said second substrate and substantially collimating therewith, in a second orthogonal plane) light from points of said second object pattern; reimaging said light in a second image plane to form a second image pattern at said second image plane corresponding to said second object pattern; positioning second image detection means at said second image plane and capturing a second image portion comprising a portion of said second image pattern; providing, by means of the capturing step, the widths and sequence of light and dark regions within the second image portion and unambiguously defining, thereby, the location of said second image portion within said second image pattern along a second image axis corresponding to a second object axis (A2) at said second object pattern and inclined to the first object axis (A1); and, thereby, determining the relative position in two orthogonal directions of the first substrate relative to the second substrate.

## Patentansprüche

1. Vorrichtung zur Kodierung einer Relativposition, umfassend ein erstes Substrat (2) mit einer ersten Mehrzahl von lichtdurchlässigen und lichtundurchlässigen Bereichen, die gemeinsam ineiner Objektebene (3) ein erstes Objektmuster von nebeneinanderliegenden Streifen (20) bilden; ein zweites Substrat (1), das in Beziehung zu und/oder im Abstand von dem ersten Substrat positioniert wird; eine erste optische Konvergenzeinrichtung (4), die zum zweiten Substrat feststehend ist, um in einer zur Objektebene orthogonalen ersten Orthogonalebene Licht aus Punkten des ersten Objektmusters im Wesentlichen zu kollimieren, um das Licht in einer ersten Bildebene wiederabzubilden und im Gebrauch an der ersten Bildebene ein dem ersten Objektmuster entsprechendes erstes Bildmuster (8) zu erzeugen; und eine an der ersten Bildebene angeordnete erste Bilderfassungseinrichtung (7) zur Erfassung eines ersten Bildteils, der einen Teil des ersten Bildmusters umfasst, wobei der erste Bildteil den nebeneinanderliegenden Streifen entsprechend abwechselnde und nebeneinanderliegende helle und dunkle Bereiche (9, 10, 11) aufweist, deren Breiten und Aufeinanderfolge unzweideutig die Lage des ersten Bildteils innerhalb des ersten Bildmusters (8) entlang einer ersten Bildachse festlegen, die einer ersten Objektachse (A1) am ersten Objektmuster entspricht, wodurch die Relativposition des ersten Substrats in Beziehung zum zweiten Substrat entlang der ersten Objektachse bestimmt wird.

2. Vorrichtung nach Anspruch 1, bei der das zweite Substrat ein Linsenschirm ist; die erste Konvergenzeinrichtung ein erstes zylindrisches Linsenelement des Schirms umfasst; und die erste Orthogonalebene orthogonal zur Längsachse des ersten zylindrischen Linsenelements ist.

3. Vorrichtung nach Anspruch 2, enthaltend eine langgestreckte Öffnungseinrichtung (5, 22), die in Bezug zum Linsenschirm feststehend und angeordnet ist, um Licht, das durch zum ersten zylindrischen Linsenelement benachbarte Linsenelemente hindurchtritt, nicht durchzulassen.

4. Vorrichtung nach Anspruch 3, bei der die Öffnungseinrichtung eine Öffnung in einer lichtundurchlässigen Beschichtung auf einem Teil der Vorderseite des Linsenschirms umfasst.

5. Vorrichtung nach einem vorangehenden Anspruch, bei der die Breiten der hellen und dunklen Bereiche bestimmt werden, indem mit der ersten Bilderfassungseinrichtung mindestens drei Begrenzungslinien zwischen den Bildern der hellen und dunklen Bereiche innerhalb des ersten Bildteils lokalisiert werden, wodurch die Daten bereitgestellt werden, um unzweideutig die Identität von einem der entsprechenden nebeneinanderliegenden Streifen und die Lage desselben entlang der ersten Objektachse in Beziehung zur ersten Konvergenzeinrichtung festzulegen.

6. Vorrichtung nach einem vorangehenden Anspruch, bei der das erste Substrat eine zweite Mehrzahl von lichtdurchlässigen und lichtundurchlässigen Bereichen aufweist, die gemeinsam in der Objektebene ein zweites Objektmuster (21) bilden; eine zweite Konvergenzeinrichtung, die zum zweiten Substrat feststehend ist, um in einer zur Objektebene orthogonalen zweiten Orthogonalebene Licht aus Punkten des zweiten Objektmusters im Wesentlichen zu kallimieren, um das Licht in einer zweiten Bildebene wiederabzubilden und im Gebrauch an der zweiten Bildebene ein dem zweiten Objektmuster entsprechendes zweites Bildmuster zu erzeugen; und eine an der zweiten Bildebene angeordnete zweite Bilderfassungseinrichtung zur Erfassung eines zweiten Bildteils, der einen Teil des zweiten Bildmusters umfasst, wobei der zweite Bildteil helle und dunkle Bereiche aufweist, deren Breiten und Aufeinanderfolge unzweideutig die Lage des zweiten Bildteils innerhalb des zweiten Bildmusters entlang einer zweiten Bildachse festlegen, die einer zweiten Objektachse (A2) am zweiten Objektmuster entspricht, wodurch die Relativposition des ersten Substrats in Beziehung zum zweiten Substrat entlang der zweiten Objektachse bestimmt wird.

7. Vorrichtung nach Anspruch 6, bei der die Lage des ersten Bildteils entlang der ersten Bildachse eine erste Ordinate liefert; die Lage des zweiten Bildteils entlang der zweiten Bildachse eine zweite Ordinate liefert; und die erste und zweite Ordinate kombiniert werden, um die Position des ersten Substrats in Beziehung zum zweiten Substrat bereitzustellen.

8. Vorrichtung nach Anspruch 7, bei der das erste und zweite Muster verjüngt sind, so dass die Breite jedes Streifens von einem Ende zum anderen abnimmt.

9. Vorrichtung nach Anspruch 7, bei der die erste Objektachse (A1) und die zweite Objektachse (A2) in Bezug zueinander geneigt sind, und im Gebrauch die Position des ersten Substrats in Beziehung zum zweiten Substrat in zwei orthogonalen Richtungen bereitgestellt wird.

10. Vorrichtung nach Anspruch 7, bei der das zweite Substrat ein Linsenschirm mit einer verjüngten Struktur ist, wobei die erste Konvergenzeinrichtung ein erstes zylindrisches Linsenelement des Schirms umfasst, das eine erste Hauptachse aufweist, und die zweite Konvergenzeinrichtung ein zweites zylindrisches Linsenelement des Schirms umfasst, das im Abstand vom ersten Linsenelement angeordnet ist und eine zweite Hauptachse aufweist, und wobei die erste und zweite Hauptachse in Bezug zueinander geneigt sind.

11. Vorrichtung nach Anspruch 9, umfassend eine Einrichtung zum Steuern der Relativpositionen der Substrate in den zwei orthogonalen Richtungen.

12. Vorrichtung nach einem vorangehenden Anspruch, bei der mindestens eine der Bilderfassungseinrichtungen ein lineares CCD-Array umfasst.

13. Vorrichtung nach einem vorangehenden Anspruch, bei der das erste Substrat einen Sperrschirm umfasst und das erste und zweite Substrat in Kombination mindestens eine Betrachtungszone für ein autostereoskopisches Anzeigesystem liefern.

14. Verfahren zum Kodieren der Position eines ersten Substrats (2) in Beziehung zu einem zweiten Substrat (1), welches die Schritte umfasst: Erzeugen eines ersten Objektmusters (20) in einer Objektebene (3) durch Bereitstellen einer ersten Mehrzahl von lichtdurchlässigen und lichtundurchlässigen Bereichen in Form von nebeneinanderliegenden Streifen auf dem ersten Substrat; Bereitstellen einer zum zweiten Substrat feststehenden ersten Konvergenzeinrichtung (4) und Positionieren des zweiten Substrats in Beziehung zu und/oder im Abstand von dem ersten Substrat; im Wesentlichen Kollimieren von Licht mit der ersten Konvergenzeinrichtung aus Punkten des ersten Objektmusters in einer ersten Orthogonalebene und Wiederabbilden des Lichts in einer ersten Bildebene, um an der ersten Bildebene ein dem ersten Objektmuster entsprechendes erstes Bildmuster zu erzeugen; Anordnen einer ersten Bilderfassungseinrichtung (7) an der ersten Bildebene und Erfassen eines ersten Bildteils, der einen Teil des ersten Bildmusters umfasst; Bestimmen, mit Hilfe des Erfassungsschritts, der Breiten und Aufeinanderfolge von hellen und dunklen Bereichen (9, 10, 11) innerhalb des ersten Bildteils und dadurch unzweideutig Festlegen der Lage des ersten Bildteils innerhalb des ersten Bildmusters (8) entlang einer ersten Bildachse, die einer ersten Objektachse (A1) am ersten Objektmuster entspricht, sowie der Position des ersten Substrats in Beziehung zum zweiten Substrat entlang der ersten Objektachse.

15. Verfahren nach Anspruch 14, welches einschließt: Anordnen der ersten Mehrzahl von nebeneinanderliegenden durchlässigen und undurchlässigen Streifen, so dass sie eine Auswahl von jeweiligen Zwischenräumen und Breiten umfassen, in einer solchen Weise, dass sich eine bestimmte Aufeinanderfolge der Zwischenräume und Breiten innerhalb des ersten Objektmusters nicht wiederholt; Lokalisieren von mindestens drei Begrenzungslinien zwischen den entsprechenden hellen und dunklen Bereichen im ersten Bildteil mit der ersten Bilderfassungseinrichtung und dadurch Ermitteln der Identität eines entsprechenden Streifens im ersten Objektmuster sowie der Lage desselben entlang der ersten Objektachse in Beziehung zur ersten Konvergenzeinrichtung.

16. Verfahren nach Anspruch 14, welches die Schritte einschließt: Bereitstellen einer zweiten Mehrzahl von lichtdurchlässigen und lichtundurchlässigen Bereichen in Form von nebeneinanderliegenden Streifen auf dem ersten Substrat, die gemeinsam in der Objektebene ein zweites Objektmuster (21) bilden; Bereitstellen einer zweiten Konvergenzeinrichtung, die in Beziehung zum zweiten Substrat feststehend ist, und damit im Wesentlichen Kollimieren von Licht aus Punkten des zweiten Objektmusters in einer zweiten Orthogonalebene; Wiederabbilden des Lichts in einer zweiten Bildebene, um an der zweiten Bildebene ein dem zweiten Objektmuster entsprechendes zweites Bildmuster zu erzeugen; Anordnen einer zweiten Bilderfassungseinrichtung an der zweiten Bildebene und Erfassen eines zweiten Bildteils, der einen Teil des zweiten Bildmusters umfasst; Bereitstellen, mit Hilfe des Erfassungsschritts, der Breiten und Aufeinanderfolge von hellen und dunklen Bereichen innerhalb des zweiten Bildteils und dadurch unzweideutig Festlegen der Lage des zweiten Bildteils innerhalb des zweiten Bildmusters entlang einer zweiten Bildachse, die einer zweiten Objektachse (A2) am zweiten Objektmuster entspricht und zur ersten Objektachse (A1) geneigt ist; und dadurch Bestimmen der Relativposition des ersten Substrats in Beziehung zum zweiten Substrat in zwei orthogonalen Richtungen.

## Revendications

1. Appareil pour le codage de position relative comprenant un premier substrat (2) ayant une première multiplicité de régions de transmission de lumière et d'arrêt de lumière formant de manière agrégée un premier motif objet de bandes juxtaposées (20) dans un plan objet (3); un second substrat (1) positionné par rapport au premier substrat, et/ou espacé de celui-ci; un premier moyen convergent optique (4) fixé sur le second substrat pour collimater pratiquement dans un premier plan orthogonal, qui est orthogonal au plan objet, la lumière provenant de points du premier motif objet, pour reformer une image de cette lumière dans un premier plan image et pour former, pendant l'utilisation, un premier motif image (8) dans le premier plan image, correspondant au premier motif objet; et un premier moyen de détection d'image (7) positionné dans le premier plan image pour capturer une première partie d'image consistant en une partie du premier motif image, dans lequel la première partie d'image, correspondant aux bandes juxtaposées, comporte des régions claires et sombres (9, 10, 11) alternées et juxtaposées dont les largeurs et la séquence définissent de manière non ambiguë la position de la première partie d'image à l'intérieur du premier motif image (8) le long d'un premier axe image correspondant à un premier axe objet (A1) dans le premier motif objet, grâce à quoi la position relative du premier substrat par rapport au second substrat le long du premier axe objet est déterminée.

2. Appareil selon la revendication 1, dans lequel le second substrat est un écran lenticulaire; le premier moyen convergent comprend un premier élément de lentille cylindrique de l'écran; et le premier plan orthogonal est orthogonal à l'axe longitudinal du premier élément de lentille cylindrique.

3. Appareil selon la revendication 2, incluant une structure d'ouverture allongée (5, 22) fixée par rapport à l'écran lenticulaire et adaptée pour arrêter la lumière qui traverse des éléments de lentille adjacents au premier élément de lentille cylindrique.

4. Appareil selon la revendication 3, dans lequel la structure d'ouverture comprend une ouverture dans un revêtement opaque sur une partie de la surface avant de l'écran lenticulaire.

5. Appareil selon l'une quelconque des revendications précédentes, dans lequel les largeurs des régions claies et sombres sont déterminées en localisant, avec le premier moyen de détection d'image, au moins trois frontières;entre les images des régions claires et sombres à l'intérieur de la première partie d'image, pour fournir ainsi les données pour définir de façon non ambiguë l'identité 'de l'une des bandes juxtaposées correspondantes et sa position le long du premier axe objet, par rapport au premier moyenconvergent.

6. Appareil selon l'une quelconque des revendications précédentes, dans lequel le premier substrat a une seconde multiplicité de régions de transmission de lumière et d'arrêt de lumière formant, de manière agrégée, un second motif objet (21) dans le plan objet; un second moyen convergent fixé au second substrat pour collimater pratiquement dans un second plan orthogonal, qui est orthogonal au plan objet, la lumière provenant de points du second motif objet, pour reformer une image de cette lumière dans un second plan image et pour former, pendant l'utilisation, un second motif image dans le second plan image, correspondant au second motif objet; et un second moyen de détection d'image positionné dans le second plan image pour capturer une seconde partie d'image comprenant une partie du second motif image, dans lequel la seconde partie d'image a des régions claires et sombres dont les largeurs et la séquence définissent de manière non ambiguë l'emplacement de la seconde partie d'image à l'intérieur du second motif image, le long d'un second axe image correspondant à un second axe objet (A2) dans le second motif objet, grâce à quoi la position relative du premier substrat par rapport au second substrat le long du second axe objet est déterminée.

7. Appareil selon la revendication 6, dans lequel la position de la première partie d'image le long du premier axe image fournit une première ordonnée; la position de la seconde partie d'image le long du second axe image fournit une seconde ordonnée; et les première et seconde ordonnées sont combinées pour fournir la position du premier substrat par rapport au second substrat.

8. Appareil selon la revendication 7, dans lequel les premier et second motifs vont en diminuant de façon que la largeur de chaque bande se réduise à partir d'une extrémité vers l'autre.

9. Appareil selon la revendication 7, dans lequel le premier axe objet (A1) et le second axe objet (A2) sont inclinés l'un par rapport à l'autre et, pendant l'utilisation, la position du premier substrat par rapport au second substrat est fournie dans deux directions orthogonales.

10. Appareil selon la revendication 7, dans lequel le second substrat est un écran lenticulaire ayant une structure allant en diminuant, dans lequel le premier moyen convergent comprend un premier élément de lentille cylindrique de l'écran ayant un premier axe principal, et le second moyen convergent comprend un second élément de lentille cylindrique de l'écran espacé du premier élément de lentille et ayant un second axe principal, et dans lequel les premier et second axes principaux sont mutuellement inclinés.

11. Appareil selon la revendication 9, comprenant un moyen pour commander les positions relatives des substrats dans les deux directions orthogonales.

12. Appareil selon l'une quelconque des revendications précédentes, dans lequel l'un au moins des moyens de détection d'image comprend un réseau linéaire de dispositifs à couplage de charge (CCD).

13. Appareil selon l'une quelconque des revendications précédentes, dans lequel le premier substrat comprend un écran barrière et les premier et second substrats procurent en combinaison au moins une zone d'observation pour un système de visualisation auto-stéréoscopique.

14. Un procédé pour coder la position d'un premier substrat (2) par rapport à un second substrat (1), qui comprend les étapes suivantes : on forme un premier motif objet (20) dans un plan objet (3) en établissant une première multiplicité de régions de transmission de lumière et d'arrêt de lumière, sous la forme de bandes juxtaposées sur le premier substrat; on établit un premier moyen convergent (4) fixé au second substrat, et on positionne le second substrat par rapport au premier substrat et/ou à distance du premier substrat; on collimate pratiquement avec le premier moyen convergent, dans un premier plan orthogonal, la lumière provenant de points du premier motif objet, et on reforme une image de cette lumière dans un premier plan image pour former un premier motif image dans le premier plan image correspondant au premier motif objet; on positionne le premier moyen de détection d'image (7) dans le premier plan image et on capture une première partie d'image comprenant une partie du premier motif image; on détermine, au moyen de l'étape de capture, les largeurs et la séquence de régions claires et sombres (9, 10, 11) à l'intérieur de la première partie d'image, et on définit ainsi sans ambiguïté la position de la première partie d'image à l'intérieur du premier motif image (8), le long d'un premier axe image correspondant à un premier axe objet (A1) au premier mptif objet, et la position du premier substrat par rapport au second substrat le long du premier axe objet.

15. Le procédé selon la revendication 14 qui comprend l'opération consistant à disposer la première multiplicité de bandes de transmission et d'arrêt juxtaposées, de façon qu'elle comprenne une sélection d'espaces et de largeurs respectifs, d'une manière telle qu'une séquence particulière de ces espaces et largeurs ne soit pas répétée à l'intérieur du premier motif objet; à localiser avec le premier moyen de détection d'image au moins trois frontières entre les régions claires et sombres correspondantes dans la première partie d'image, et à établir ainsi l'identité d'une bande correspondante dans le premier motif objet et sa position le long du premier axe objet, par rapport au premier moyen convergent.

16. Procédé selon la revendication 14, comprenant les étapes suivantes : on établit une seconde multiplicité de régions de transmission de lumière et d'arrêt de lumière sous la forme de bandes juxtaposées sur le premier substrat, formant de manière agrégée un second motif objet (21) dans le plan objet; on établit un second moyen convergent fixé par rapport au second substrat, et on collimate pratiquement avec celui-ci, dans un second plan orthogonal, la lumière provenant de points du second motif objet; on reforme une image de cette lumière dans le second plan image pour former un second motif image dans le second plan image, correspondant au second motif objet; on positionne un second moyen de détection d'image dans le second plan image et on capture une seconde partie d'image comprenant une partie du second motif image; on fournit, au moyen de l'étape de capture, les largeurs et la séquence de régions claires et sombres à l'intérieur de la seconde partie d'image, et on définit ainsi sans ambiguïté la position de la seconde partie d'image à l'intérieur du second motif image le long d'un second axe image sélectionné correspondant à un second axe objet (A2) dans le second motif objet, et incliné par rapport au premier axe objet (A1); et on détermine ainsi la position relative du premier substrat par rapport au second substrat dans deux directions orthogonales.
